# EUROPEAN PATENT APPLICATION

(11) **EP 3 518 214 A1**
(43) Date of publication of application: **31.07.2019**
(21) Application number: 19153161.5
(22) Date of filing: 22.01.2019
(51) Int. Cl.: G08G 5/00, G01S 13/95

(54) **SMART DATA QUERY METHOD AND SYSTEM**

(30) Priority: 26.01.2018 US 201815881202
(71) Applicant: Honeywell International Inc., Morris Plains, NJ New Jersey 07950 (US)
(72) Inventor: GOLDSTEIN, David B., Morris Plains, NJ 07950 (US); HERMANN, Philip, Morris Plains, NJ 07950 (US)
(74) Representative: Houghton, Mark Phillip

(57) **Abstract**

A method and system for a smart data query are disclosed. The method comprises automatically monitoring one or more data sources that transmit lower fidelity data, and automatically looking for one or more salient features in the lower fidelity data to determine whether more data is needed. When more data is needed, the method identifies a data source that provides higher fidelity data that corresponds to the needed data. The higher fidelity data is then received from the identified data source. The method then updates information, consumable by a system or an operator, with the received higher fidelity data.

## Description

### BACKGROUND

There are many systems on vehicles which generate information that needs to be transferred to an infrastructure solution. In the case of aircraft, such systems can be an onboard radar that provides weather information, an onboard traffic collision avoidance system (TCAS) that provides traffic and collision information, or other aircraft systems that provide insight into the current state of the aircraft and the state of the region around the aircraft. In addition, other types of vehicles have many systems that provide insight into the current state both within and without such vehicles.

Vehicle information can be downloaded to a ground (infrastructure) solution for immediate or future consumption. Such consumption can include diagnosis and/or prognosis of the current and future state of the vehicle itself for emergency and/or maintenance; the current or future state of the region in the immediate vicinity of the vehicle for current or near term modification of the vehicle path; the current or future state of the region in the immediate vicinity of the vehicle for current or near term modification of another vehicle's path; or long term data mining and trending.

One approach for obtaining vehicle information is to continuously broadcast vehicle and sensor data from the vehicle via any of the available data paths. This method uses a significant amount of available bandwidth and is both inefficient and costly. For example, this method can result in unnecessary data, such as data with no value (e.g., "clear skies" being transmitted), or repetitive data, such as the same data being sent by many different sources at the same time.

Another approach is to review the vehicle data itself onboard and decide what data to send to the ground in real time, what data to store for later transmission to the ground, and what data to potentially decimate. For example, an onboard intelligent data filter can be used that filters the data generated on the vehicle (e.g., only send data about a storm; don't send "clear skies" and don't send data that has not changed enough from the last transmission). However, such a filter has no a priori knowledge of the data currently residing on the ground, nor does it have knowledge of data being sent from other vehicles. As such, this approach also wastes limited bandwidth and is costly. In addition, any airborne intelligence also requires additional cost to modify (if necessary) certified software.

There is also potentially additional data available on the ground not known to the vehicle, which can significantly influence the need for vehicle data.

### SUMMARY

A method and system for a smart data query are disclosed. The method comprises automatically monitoring one or more data sources that transmit lower fidelity data, and automatically looking for one or more salient features in the lower fidelity data to determine whether more data is needed. When more data is needed, the method identifies a data source that provides higher fidelity data that corresponds to the needed data. The higher fidelity data is then received from the identified data source. The method then updates information, consumable by a system or an operator, with the received higher fidelity data.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a ground system that hosts a computer implemented method for a smart data query, according to one embodiment;
Figure 2 is a flow diagram of an exemplary method for a smart data query, which is operable on a vehicle, according to another embodiment; and
Figure 3 is a flow diagram of an operational method for a smart data query, according to one implementation, to obtain weather information.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A smart data query method and system are described herein. The method and system can be implemented in a ground center, for example, to monitor lower fidelity information from multiple data sources. Upon detection of data that is potentially interesting, the method can query one or more data sources for higher fidelity information. This approach reduces some air-ground bandwidth issues associated with constant broadcasting of large amounts of data, such as by fusing various data elements at a ground center location.

As used herein, a "smart query" or "smart data query" generally means using one set of data obtained from one or more sources to obtain additional data from the same or different sources. For example, a smart query method uses one set of received data, such as lower fidelity data, to obtain additional data, such as higher fidelity data.

As used herein, the "fidelity" of data is the degree to which information represents reality. In particular, the "lower" fidelity data is a representation of reality using the minimal amount of information necessary to advise a user and determine the need for additional information. The "higher" fidelity data is a more accurate representation of reality, providing additional details to the user with the inclusion of additional data.

The smart query method allows for obtaining data from one or more vehicles, thereby reducing the burden on various data pipes that are available. The present method is particularly useful for connected vehicles, such as connected aircraft, connected watercraft, or connected ground vehicles.

In some monitoring systems implemented with the smart query algorithm, such systems can be continuously monitoring various items. These systems also have knowledge of the current availability of sources of information. When one of these systems identifies an event of interest (e.g., the appearance of a storm identified via a weather information service) the system can identify an aircraft near the storm (based on flight plan, feeds from aircraft data sources, etc.) and request high fidelity radar data from that aircraft. This request is only sent to the source aircraft when other indicators identify a need. The smart query can go further to request certain parts of the radar buffer to fill in gaps in terrestrial data. For example, if some radar data on the storm is available, but altitude data is missing, the smart query can ask the aircraft to only send the altitude data.

The smart data query method can be expanded to include collision data such as from an aircraft traffic collision avoidance system (TCAS), data from various aircraft sensors that measure the environment around an aircraft, traffic requests sent to the aircraft based on airport reported delays, or the like. In addition, the present technique can be used to query an aircraft itself, not only for data related to an aircraft's surroundings, but also for the aircraft state. Some minimal data can be sent to the ground via a narrow data pipe and a query for higher fidelity information can be sent to the aircraft only when necessary. This can be related to fault information, performance, or any other measurable data. One example is the receipt of a fault from the aircraft and having the smart query system request some detailed performance information to enhance repair and troubleshooting.

In another example, a database update can be published or a software update for a line replaceable unit (LRU) can be published from a manufacturer. The smart query system can request a software part number manifest or database manifest from the aircraft (i.e., what is currently loaded) in order to schedule a maintenance action

The present smart query system can also be applied for use with a ground vehicle such as a car. For example, if a recall notice is sent out on a particular vehicle, the smart query system can automatically request not only maintenance records for a particular vehicle identification number (VIN) (e.g., via a ground based connection like CARFAX), but it can also query the connected car (e.g., for part number data, software parts, etc.) to determine if the recall needs to be scheduled.

The present smart query approach removes the need for intelligence onboard a vehicle to understand what to send and when. This approach removes the need to continuously transmit data from the vehicle, which wastes time, bandwidth, and money. For example, by using the smart query system, there is no need to send a "clear skies" message, because there is no feature or interesting information in such a message.

Alternatively, the smart query technique can be adapted for used in stationary platforms, such as oil refineries, gas pipelines, or the like. For example, valves in the pipelines can be monitored remotely by a monitoring system. When an event of interest is identified such a valve malfunction, remote devices associated with the valves can be queried to obtain more detailed information.

In an example implementation, the smart query algorithm can be run on a service that monitors a current terrestrial (or potentially airborne) weather feed, such as from the National Oceanic and Atmospheric Administration (NOAA), Weather Underground (Wunderground), or the like. At the first sign of an event of interest, the smart query algorithm looks for an aircraft near and/or approaching the event of interest. Information about such aircraft can come from either submitted flight plans and/or direct feeds from flight data systems, for example. From this information, the smart query algorithm selects a target aircraft and requests the radar buffer from the target aircraft to be sent to the ground to improve the fidelity of weather data previously received for the event of interest, such as a weather image.

The present approach minimizes the data being sent from a target vehicle by requesting only the data needed from a very limited or targeted source. The intelligence of the smart query technique can be built into ground systems, and as such, modification of these uncertified solutions when needed is faster and less expensive.

Further details of various embodiments are described hereafter with reference to the drawings.

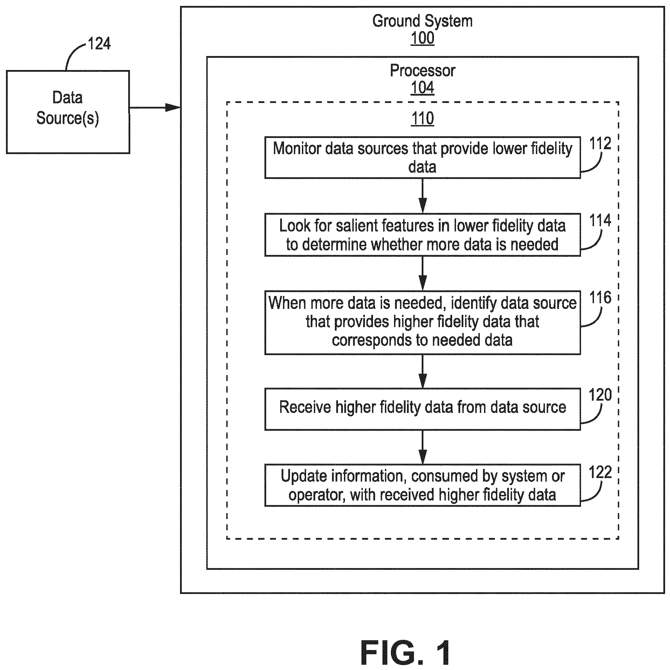

Figure 1 depicts a ground system 100 that hosts a computer implemented method 110 for a smart data query, according to one embodiment. The ground system 100 includes a processor 104 operative to execute instructions for performing method 110. The ground system 100 is in communication with one or more data sources 124, which can be ground-based data sources or airborne data sources.

The method 110 automatically monitors data sources that provide lower fidelity data (block 112), and automatically looks for one or more salient features in the lower fidelity data to determine whether more data is needed (block 114). When method 110 determines the need for more data, a data source is identified that provides higher fidelity data that corresponds to the needed data (block 116). The higher fidelity data is then received from the identified data source (block 120). The method 110 then acts on the received higher fidelity data, such as by updating information, consumed by the system or an operator, with the received higher fidelity data (block 122).

In one implementation of method 110, a mechanism can be provided to monitor a feed from a higher fidelity data source. The higher fidelity data can then be used when the need arises. In an alternative implementation of method 110, prior to receiving the higher fidelity data, the method can send a request for the higher fidelity data to the identified data source.

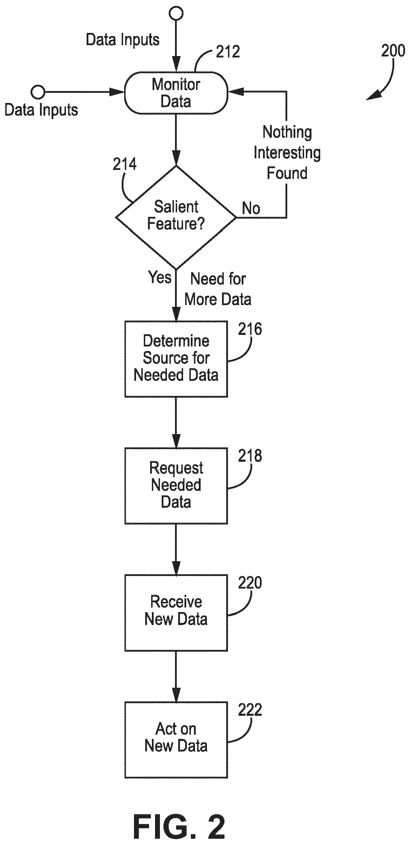

Figure 2 is a flow diagram of an exemplary method 200 for a smart data query, which can be operated on a vehicle such as an aircraft, according to another embodiment. Initially, method 200 automatically monitors data inputs received from various data sources that provide lower fidelity data (block 212). The method 200 automatically looks for one or more salient features in the lower fidelity data to determine whether more data is needed (block 214). If nothing interesting is found, method 200 continues to monitor the data inputs. When method 200 determines the need for more data, a data source is determined that provides higher fidelity data that corresponds to the needed data (block 216). A request for the needed data is then sent to the identified data source (block 218). When new data is received based on the request for the needed data (block 220), method 200 acts on the received new data (block 222), such as by updating information with the received higher fidelity data.

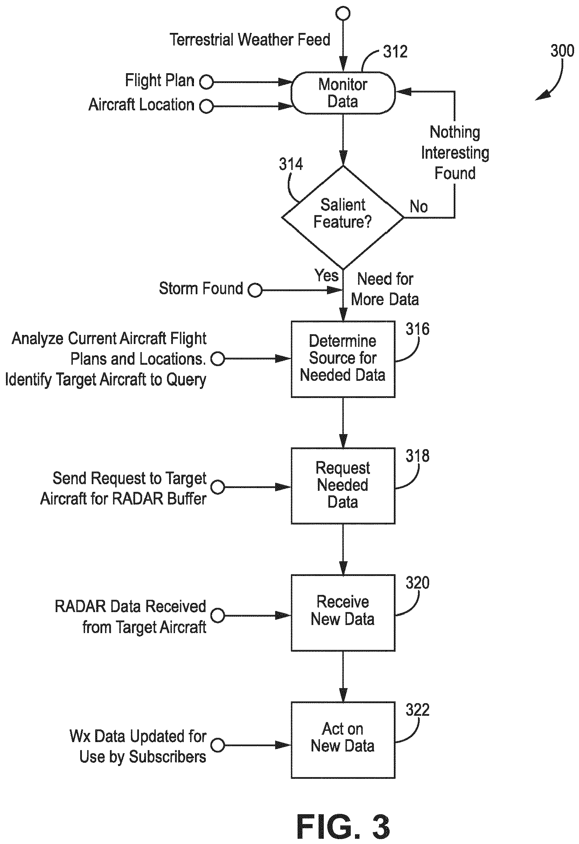

Figure 3 is a flow diagram of an operational method 300 for a smart data query, according to one implementation, to obtain weather information. Initially, method 300 automatically monitors data inputs from various data sources that provide lower fidelity data (block 312), such as a flight plan of an aircraft, an aircraft location, or a terrestrial weather feed (e.g., from NOAA, or Wunderground). The method 300 automatically looks for one or more salient features in this lower fidelity data to determine whether more data is needed (block 314). If nothing interesting is found, method 300 continues to monitor the data inputs. When method 300 determines the need for more data, such as when a storm is found, a data source is determined that provides higher fidelity data that corresponds to the needed data (block 316). For example, method 300 can analyze current aircraft flight plans and locations, and identify a target aircraft to query for the needed data. A request for the needed data is then sent to the identified data source (block 318). For example, the request can be sent to the target aircraft for its radar buffer. When new data is received (block 320), such as radar data received from the target aircraft, method 300 acts on the received new data (block 322). For example, weather (Wx) data can be updated for use by subscribers.

A processor used in the present system can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The computer or processor can also include functions with software programs, firmware, or other computer readable instructions for carrying out various process tasks, calculations, and control functions used in the present system.

The present methods can be implemented by computer executable instructions, such as program modules or components, which are executed by at least one processor. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer- or processor-readable instructions. Various process tasks can include controlling spatial scanning and orientation, laser operation, photodetector control and operation, and awareness of system orientation and state. These instructions are typically stored on any appropriate computer program product that includes a computer readable medium used for storage of computer readable instructions or data structures. Such a computer readable medium can be any available media that can be accessed by a general purpose or special purpose computer or processor, or any programmable logic device.

Suitable processor-readable media may include storage or memory media such as magnetic or optical media. For example, storage or memory media may include conventional hard disks, compact disks, or other optical storage disks; volatile or non-volatile media such as Random Access Memory (RAM); Read Only Memory (ROM), Electrically Erasable Programmable ROM (EEPROM), flash memory, and the like; or any other media that can be used to carry or store desired program code in the form of computer executable instructions or data structures.

### Example Embodiments

Example 1 includes a computer-implemented method, comprising: automatically monitoring one or more data sources that transmit lower fidelity data; automatically looking for one or more salient features in the lower fidelity data to determine whether more data is needed; when more data is needed, identifying a data source that provides higher fidelity data that corresponds to the needed data; receiving the higher fidelity data from the identified data source; and updating information, consumable by a system or an operator, with the received higher fidelity data.
Example 2 includes the method of Example 1, further comprising sending a request for the higher fidelity data to the identified data source prior to receiving the higher fidelity data.
Example 3 includes the method of any of Examples 1-2, wherein the one or more data sources comprise ground-based data sources or airborne data sources.
Example 4 includes the method of any of Examples 1-3, wherein the one or more data sources comprise one or more weather information services.
Example 5 includes the method of any of Examples 1-3, wherein the one or more data sources comprise one or more vehicles.
Example 6 includes the method of Example 5, wherein the one or more vehicles comprise aircraft, watercraft, or ground vehicles.
Example 7 includes the method of any of Examples 1-3, wherein the one or more data sources comprise one or more stationary platforms.
Example 8 includes the method of any of Examples 1-4, wherein the lower fidelity data comprises one or more terrestrial weather feeds.
Example 9 includes the method of any of Examples 1-3, wherein the lower fidelity data comprises a flight plan of an aircraft, an aircraft location, aircraft traffic collision avoidance data, data related to an aircraft's surroundings, or a state of an aircraft.
Example 10 includes the method of any of Examples 1-3, wherein the higher fidelity data comprises radar data from an aircraft.
Example 11 includes a system for a smart data query, the system comprising: at least one processor in operative communication with one or more data sources; and a processor readable medium that includes instructions, executable by the processor, to perform a method comprising: automatically monitoring the one or more data sources for transmission of lower fidelity data; automatically looking for one or more salient features in the lower fidelity data to determine whether more data is needed; when more data is needed, identifying a data source that provides higher fidelity data that corresponds to the needed data; receiving the higher fidelity data from the identified data source; and updating information, consumable by another system or an operator, with the received higher fidelity data.
Example 12 includes the system of Example 11, wherein prior to receiving the higher fidelity data, the method further comprises: sending a request for the higher fidelity data to the identified data source.
Example 13 includes the system of any of Examples 11-12, wherein the at least one processor is located in a ground center.
Example 14 includes the system of any of Examples 11-12, wherein the at least one processor is located in a vehicle.
Example 15 includes the system of any of Examples 11-14, wherein the one or more data sources comprise ground-based data sources or airborne data sources.
Example 16 includes the system of any of Examples 11-15, wherein the one or more data sources comprise one or more vehicles.
Example 17 includes the system of Example 16, wherein the one or more vehicles comprise aircraft, watercraft, or ground vehicles.
Example 18 includes the system of any of Examples 11-12, wherein the one or more data sources comprise one or more stationary platforms.
Example 19 includes a computer program product, comprising: a non-transitory computer readable medium having instructions stored thereon, executable by a processor, to perform a method for a smart data query, the method comprising: automatically monitoring one or more data sources for transmission of lower fidelity data; automatically looking for one or more salient features in the lower fidelity data to determine whether more data is needed; when more data is needed, identifying a data source that provides higher fidelity data that corresponds to the needed data; receiving the higher fidelity data from the identified data source; and updating information, consumable by a system or an operator, with the received higher fidelity data.
Example 20 includes the computer program product of Example 19, wherein prior to receiving the higher fidelity data, the method further comprises: sending a request for the higher fidelity data to the identified data source.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A computer-implemented method, comprising:
automatically monitoring one or more data sources that transmit lower fidelity data;
automatically looking for one or more salient features in the lower fidelity data to determine whether more data is needed;
when more data is needed, identifying a data source that provides higher fidelity data that corresponds to the needed data;
receiving the higher fidelity data from the identified data source; and
updating information, consumable by a system or an operator, with the received higher fidelity data.

2. The method of claim 1, further comprising sending a request for the higher fidelity data to the identified data source prior to receiving the higher fidelity data.

3. The method of claim 1, wherein the one or more data sources comprise ground-based data sources or airborne data sources.

4. The method of claim 1, wherein the one or more data sources comprise one or more weather information services.

5. The method of claim 1, wherein the one or more data sources comprise one or more vehicles.

6. The method of claim 1, wherein the one or more data sources comprise one or more stationary platforms.

7. The method of claim 1, wherein the lower fidelity data comprises one or more terrestrial weather feeds, a flight plan of an aircraft, an aircraft location, aircraft traffic collision avoidance data, data related to an aircraft's surroundings, or a state of an aircraft.

8. The method of claim 1, wherein the higher fidelity data comprises radar data from an aircraft.

9. A system for a smart data query, the system comprising:
at least one processor in operative communication with one or more data sources; and
a processor readable medium that includes instructions, executable by the processor, to perform a method comprising:
automatically monitoring the one or more data sources for transmission of lower fidelity data;
automatically looking for one or more salient features in the lower fidelity data to determine whether more data is needed;
when more data is needed, identifying a data source that provides higher fidelity data that corresponds to the needed data;
receiving the higher fidelity data from the identified data source; and
updating information, consumable by another system or an operator, with the received higher fidelity data.

10. The system of claim 9, wherein prior to receiving the higher fidelity data, the method further comprises:
sending a request for the higher fidelity data to the identified data source.
